# EUROPEAN PATENT APPLICATION

(11) **EP 1 213 843 A1**
(43) Date of publication of application: **12.06.2002**
(21) Application number: 00126844.0
(22) Date of filing: 07.12.2000
(51) Int. Cl.: H04B 1/38, H04M 1/60

(54) **Radio wave transmittal portable telephone carrier**

(71) Applicant: EVERSPRING INDUSTRY CO. LTD., Sec. 1, Tu Cheng City, Taipei Hsien (TW)
(72) Inventor: Kao, Eric, Sec. 1, Tu Cheng City, Taipei Hsien (TW)
(74) Representative: Viering, Jentschura & Partner

(57) **Abstract**

Radio wave transmittal portable telephone carrier is composed of a mounting base, a connection port, and a kerf. The connection port is formed at the end side of the mounting base to be coupled with the portable telephone, and the kerf is formed on the rear side of the mounting base to attach the carrier to the user's waist belt so that the user is able to use the telephone conveniently without worring about his/her privacy. A communication circuit board equipped in the carrier includes an automatic receiving circuit unit, a transmitting circuit unit, and a transforming circuit unit. With these circuit units, input and output signals of the portable telephone are communicative with other remote telephones.

## Description

### BACKGROUND OF THE INVENTION

### 1. Field of the invention

The present invention relates to a portable telephone carrier, and more particularly to a radio wave transmittal portable telephone carrier to be hanged on the user's waist belt, high quality radio wave is transmittal via the carrier with hand-free function.

### 2. Description of the Prior Art

To use a portable telephone while driving a car is dangerous and such a behavior is often forbidden according to law. A portable telephone hand-free kit is therefore appears to become a timely solution. The portable telephone is set on the mounting base of a hand-free kit before starting the car, then the sound of portable telephone is audible through the speaker of the hand-free kit or of the car speaker during the car is moving. However, the recently developed hand-free kit for portable telephone has some inherent shortcomings:

1.The original car interior decorations have to be intensively reorganized in order to conceal related wiring and equipment for the hand-free kit causing difficulty in maintenance and removal afterward.

2.If power is directly supplied from the car lighter by connecting thereto, in addition to possibility of affecting the function of the car-lighter, the hand-free kit occupying space thereat may be an obstacle to operation of the steer-wheel, gear shift lever, and hand brake etc. Besides in the case the facing direction of the telephone has to be adjusted while the car is moving the drivers attention will be scattered in the worst even causing a catastrophic accident.

3.In any telephone system no matter it is a conventional one or a hand-free kit, the audible voice must depend on a speaker to carry out so that protection for privacy is hard to obtain. Connection cords of an earphone meandering in a narrow car space is much annoyance.

4.Up to now, the hand-free kit for portable telephone is not applicable for radio wave transmission.

In view of the foregoing situation, the inventor of the invention herein conducted intensive research based on many years of experience, gained through professional engagement in the manufacturing of related products, with continuous experimentation and improvement culminating in the development of the present invention.

### SUMMARY OF THE INVENTION

It is a first object of the present invention to provide a radio wave transmittal portable telephone carrier to transmit the input signal of the portable telephone to a receiving end.

It is a second object of the present invention to provide a radio wave transmittal portable telephone carrier that can be attached to an appropriate location, such as user's waist belt for the user to handily use it with a convenient mobility but unnecessary to occupy an additional space.

It is a third object of the present invention to provided a radio wave transmittal portable telephone carrier which has function of protecting privacy of communication over portable telephone.

To achieve these and other objects of the present invention, the radio wave transmittal portable telephone carrier comprises a mounting base, a connection port, and a kerf. Wherein the connection port is formed at the end side of the mounting base to be coupled with the portable telephone, and the kerf is formed on the rear side of the mounting base to attach the carrier to the user's waist belt so that the user is able to use the telephone conveniently without worring about his /her privacy. A communication circuit board equipped in the carrier includes an automatic receiving circuit unit, a transmitting circuit unit, and a transforming circuit unit. With these circuit units, input and output signals of the portable telephone are communicative with other remote telephones.

### BRIEF DESCRIPTION OF THE DRAWINGS

The above and other objects, advantages and features of the present invention will become more readily appreciated and understood from a consideration of the following detailed description of preferred and modified forms of the present invention when taken together with the accompanying drawings in which:
Fig. 1A is a three dimensional lateral view of the present invention;
Fig. 1B is a side view of the present invention and its hanger;
Fig. 2 is a view showing how a portable telephone is coupled with the present invention;
Fig. 3 is a view showing that the user is equipped with a complete set of portable telephone on its carrier of the present invention hanged on his waist belt.

### DETAILED DESCRIPTION OF THE PREFERRED EMBODIMENT

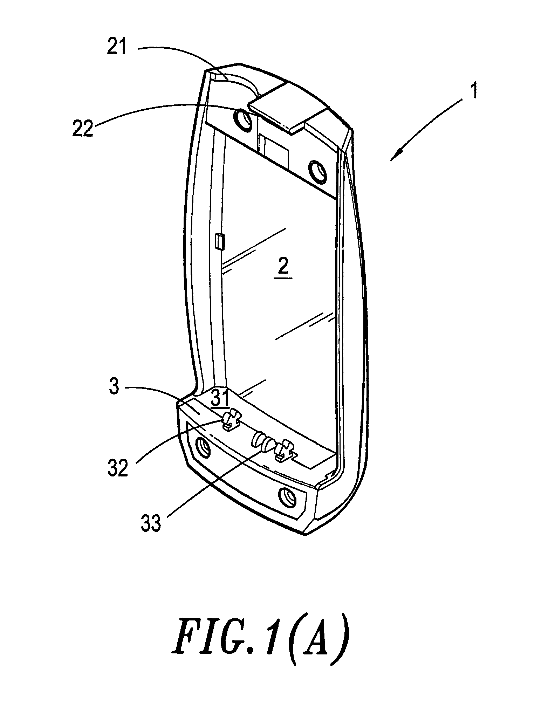

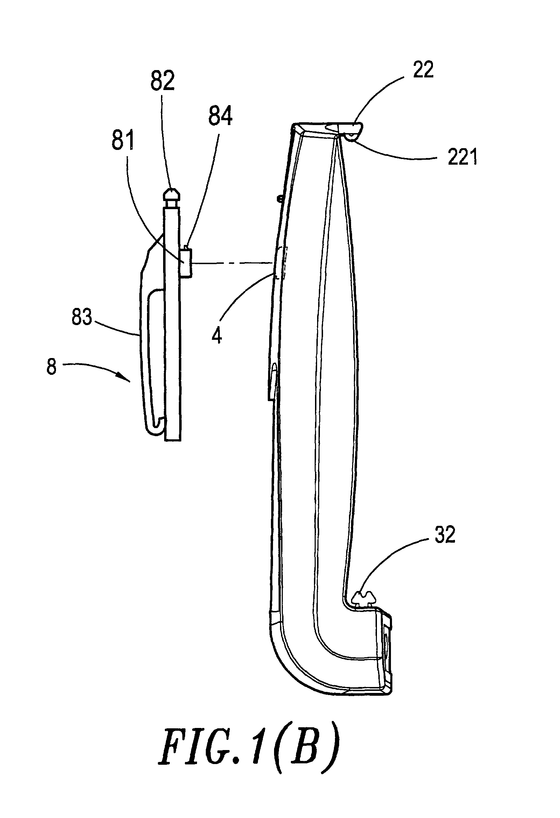

Referring to Figs. 1A and 1B, the radio wave transmittal portable telephone carrier 1 of the present invention comprises a semi-enclosing mounting base 2, a connection port 3, and a kerf 4. In the mounting base 2 there is a telephone circuit board having communication function which is capable of transmitting telephone signal of the portable telephone to a receiving end, such as a wireless ear phone through the telephone carrier 1. The connection port 3 is provided on the end side surface of the mounting base 2, the connection port 3 has a supporting platform 31, and several protruded contacts 33 and hasps 32 which are suitable for mounting bases of various portable telephones and mating with their wire terminals of microphone, receiver, or power supply plug. The battery unit of the portable telephone is usable as a power supply source to the telephone carrier 1. The kerf 4 is formed on the rear side of the mounting base 2.

A variety of designs for telephone carrier 1 shall be provided to match various kinds of portable telephone on the market. The one shown in Figs. 1A and 1B is an example which matches the product Type T-28sc of **ERICSSON**®. one of the largest companies in Taiwan. In order to meet such particular requirements, in the present invention, a recessed arcuate surface 21 is provided on the portion where an antenna is installed, and a fastener arm 22 with a grip claw 221 is stretched out near the arcuate surface 21 for holding a portable telephone.

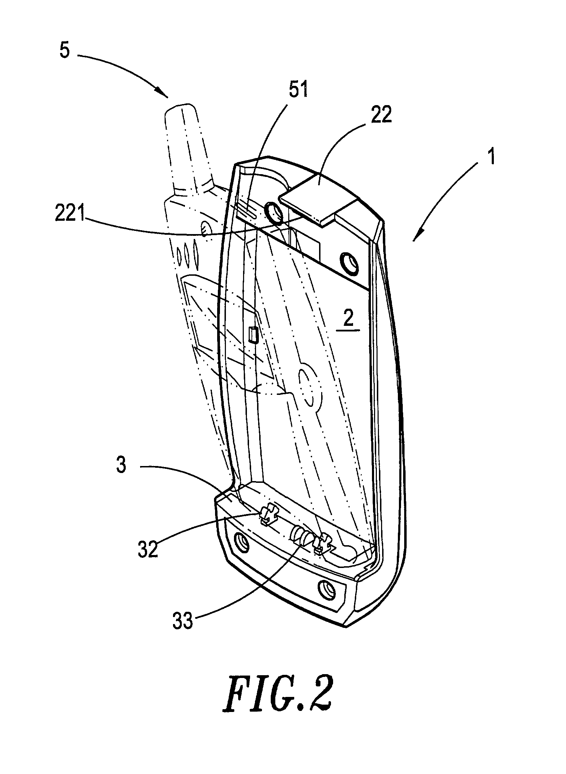

Referring to Fig.2, the drawing illustrates how the portable telephone is coupled with the telephone carrier. The portable telephone 5 is attached flush onto the mounting base 2 by aligning to the connection port 3, and by gripping a set slot 51 on the portable telephone 5 with the claw 221 of the fastener arm 22 thereby tightly fastening the portable telephone 5 on the mounting base 2. After that the telephone carrier 1 and the portable telephone 5 are able to work cooperatively by means of functional operation of the telephone circuit and transmit the communication signal or the likes to a receiving end such as a wireless earphone so as to perform hand-free radio communication.

The communication circuits included in the telephone carrier 1 are an automatic receiving circuit unit, a transmitting circuit unit, a transforming circuit unit. With these circuits, the output/input signals may be transmitted/received from/by the portable telephone for carrying out communication.

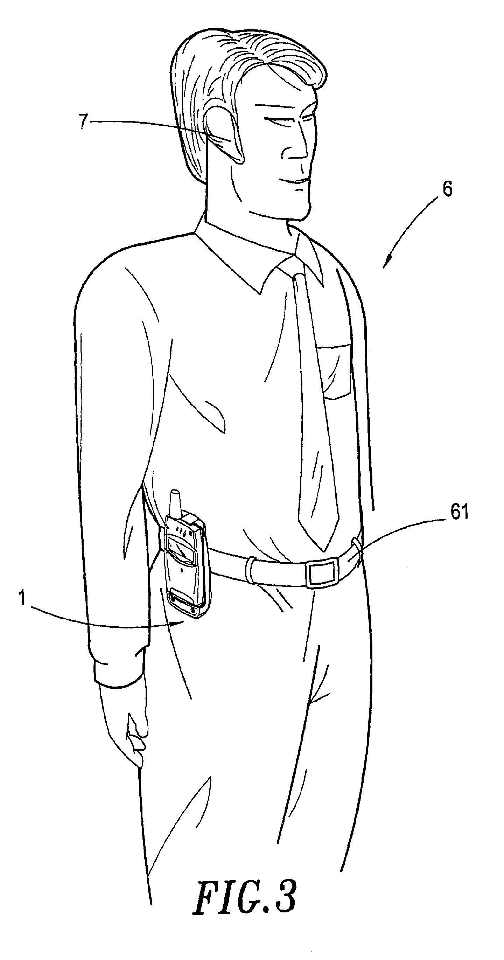

Referring to Figs. 1B and 3 simultaneously, the kerf 4 formed on the rear surface of the mounting base 2 of the carrier 1 is for attaching it to the user's waist belt 61 by means of a hanger 8. By inlaying a set boss 81 of the hanger 8 into the kerf 4, and then by hooking a hook 83 on the user's waist belt 61, or other relevant place, coupling of the carrier 1 and the telephone 5 is completed. In the case of taking the telephone 5 off the carrier 1, by pushing down the release button 82, and a tenon 84 is retracted into the set boss 81 thereby the telephone 5 is separated from the carrier 1. The user carrying the telephone carrier 1 together with the portable telephone 5 on his/her waist belt 6 is able to enjoy a convenient mobility without feeling of an additional burden. Up to date equisite and diverse design of its appearance corporated with lustrous colors gives the user a pleasant feeling.

The essential function of the kerf 4 is attaching the telephone carrier 1 to a proper location, thus, no matter what combination means are used to hook, clip, or fasten the present invention, those are all covered by the present invention.

From the above description, it is clearly understood that the present invention has several innovative features such as it is able to perform wireless hand-free communication with excellent mobility closely following the user body, and reliably protect the user's privacy.

It is therefore to be understood that the above and other modifications and changes may be readily made in the construction and arrangement of elements comprising the preferred and modified forms of invention without departing from the spirit and scope of the invention as defined by the appended claims and reasonable equivalents thereof.

## Claims

1. A Radio wave transmittal portable telephone carrier , comprising:
a semi-enclosing mounting base for setting said portable telephone therein and having a communication circuit board;
a connection port provided on the end side surface of said mounting base and having several contacts for mating with terminals of various kinds of portable telephone; and
a kerf formed on the rear surface of said mounting base for attaching to the user's waist belt,
with this structure, said portable telephone carrier is able to transmit telephone signal of said portable telephone to a receiving end, such as a wireless earphone therethrough.

2. The portable telephone carrier of claim 1, wherein said connection port has a supporting platform and several protruded contacts and hasps.

3. The portable telephone carrier of claim 1, wherein said mounting base has one or more than one fastener arm and grip claw constructed in various figures for fastening said portable telephone of different types.

4. The portable telephone carrier of claim 1, wherein at least a receiving circuit unit, a transmitting circuit unit, and a transforming circuit unit are installed on said communication circuit board.

5. The portable telephone carrier of claim 1, wherein said kerf has a function of fixing said mounting base to a relevant place no matter what combination menas are used to hook, clip or fasten said mounting base for setting said carrier.
